# EUROPÄISCHE PATENTSCHRIFT

(11) **EP 0 338 130 B1**
(45) Veröffentlichungstag und Bekanntmachung des Hinweises auf die Patenterteilung: **24.11.1993**
(21) Anmeldenummer: 88121169.2
(22) Anmeldetag: 17.12.1988
(51) Int. Cl.: F16F 9/36, F16J 15/56

(54) **Dichtung für einen Teleskopdämpfer**
Sealing for a telescopic shock absorber
Joint pour un amortisseur téléscopique

(30) Priorität: 19.04.1988 DE 3813037
(43) Veröffentlichungstag der Anmeldung: 25.10.1989
(73) Patentinhaber: Firma Carl Freudenberg, 69469 Weinheim (DE)
(72) Erfinder: Beutel, Achim, D-6947 Laudenbach (DE); Wetzel, Michael, D-6842 Bürstadt (DE)

(56) Entgegenhaltungen:
- WO-A-81/00078
- DE-A- 2 709 000
- DE-A- 3 620 539
- DE-C- 2 759 943
- DE-U- 7 705 770
- US-A- 4 239 243
- US-A- 4 268 045
- PATENT ABSTRACTS OF JAPAN vol. 7, no. 106 (M-213)(1251) 10 Mai 1983, & JP-A-58 28032 (TAIHOU KOGYO K.K.) 18 Februar 1983,

## Beschreibung

Die Erfindung betrifft eine Dichtung für die Kolbenstange eines Teleskopstoßdämpfers nach dem Oberbegriff von Anspruch 1.

Eine solche Dichtung ist aus der WO-A-81/00078 bekannt. Der Lippenring besteht aus PTFE und ist direkt an den Stützring aus gummielastischem Werkstoff angeformt. Im herstellungsbedingten Zustand ist die vorbekannte Dichtung in axialer Richtung beiderseits durch ebene, ineinander übergehende Stützflächen begrenzt, wobei die Dichtung während der bestimmungsgemäßen Verwendung im Bereich ihres Lippenrings in Richtung des abzudichtenden Mediums gekröpft ist.

Aus der US-PS 4,239,243 ist eine Radialwellendichtung bekannt, die einen Stützring und einen am Stützring festgelegten Elastomerkörper aufweist, wobei der Elastomerkörper auf der der abzudichtenden Welle zugewandten Seite mit einer PTFE-Beschichtung versehen ist.

Eine Dichtung zur Abdichtung von Kolbenstangen, die einen innenliegenden Lippenring aus PTFE und eine außenliegenden Stützring umfaßt, ist aus der DE-A 36 20 539 bekannt. Die Dichtung wird im Bereich einer Durchtrittsstelle einer axialbeweglichen Stange eines hydraulischen Gerätes durch eine Gehäusewand eines flüssigkeitsgefüllten Raumes eingesetzt, der zeitweilig unter Überdruck steht. Die Dichtung besteht aus zwei Einzelteilen, dem außenliegenden Stützring aus Gummi, der als Spannring ausgebildet ist und dem in radialer Richtung innenliegenden Lippenring aus PTFE. Die beiden Ringe sind in einer umlaufenden Nut des Gehäuses angeordnet und dichten die axiale bewegliche Kolbenstange gegen das Gehäuse ab.

Aus der DE-PS 27 59 943 ist eine Dichtungsanordnung für die Kolbenstange eines Stoßdämpfers bekannt, wobei die zur Anwendung gelangende Dichtung zwei einen axialen Abstand hintereinander aufweisende Dichtringe, die unabhängig voneinander hergestellt und montiert sind, umfaßt.

Aus der DE-A-2 709 000 ist eine Radialdichtung bekannt, die aus einem Lippenring und ein Stützring besteht, die aus unterschiedlichen polymeren Werkstoffen bestehen und im warmplastischen Zustand miteinander verbunden sind. Zur besseren Befestigung der Dichtung in einer Aufnahmebohrung ist diese mit einem Ringbund versehen.

Der Erfindung liegt die Aufgabe zugrunde, eine Dichtung für die Kolbenstange eines Teleskopstoßdämpfers zu zeigen, bei der schädliche Deformierungen des Lippenringes auch in kritischen Betriebssituationen bei Spitzendrücken, die auf die Dichtung wirken, zuverlässig vermieden werden. Druckspitzen von 100 bar sollen ohne Beeinträchtigung der Gebrauchseigenschaften während einer langen Gebrauchsdauer abgedichtet werden können. Außerdem soll die Dichtung einfach herstellbar und montierbar sein.

Diese Aufgabe wird erfindungsgemäß durch die kennzeichnenden Merkmale von Anspruch 1 gelöst. Auf vorteilhafte Ausgestaltungen nehmen die Unteransprüche bezug.

Bei der erfindungsgemäßen Dichtung hintergreift der Stützring den Lippenring im Bereich der gegenseitigen Berührungsfläche auf der von dem abzudichtenden Raum abgewandten Seite mit wenigstens einem nach innen vorspringenden Stützbund, wobei dem Stützbund eine sich im wesentlichen zylindrisch erstreckte Zylinderfläche in Richtung des abgedichteten Raums vorgelagert ist und die Zylinderfläche eine axiale Länge hat, die wenigstens so groß ist wie der in gleicher Richtung gemessene Abstand der Dichtkante von der Stirnfläche. Hierbei ist von Vorteil, daß sich durch diese Ausgestaltung eine besonders stabile einstückige gegenseitige Verbindung im Bereich der gegenseitigen Berührungsflächen auf der von dem abgedichteten Raum abgewandten Seite ergibt. Diese stabile Verbindung kann bedarfsweise durch zwei einander durchschneidende Kegelflächen begrenzt sein, was die Herstellung der Dichtung erleichtert. Die dem Stützbund in Richtung des abgedichteten Raumes vorgelagerte zylindrisch ausgebildete Zylinderfläche bedingt besonders vorteilhafte Gebrauchseigenschaften bei wechselnden Drücken, die während der bestimmungsgemäßen Verwendung auf die Dichtung wirken können. Die sich in kritischen Betriebssituationen ergebenden Spitzendrücke innerhalb des abgedichteten Raumes vermögen in einem solchen Falle nicht zum Auftreten schädlicher Deformierungen des Lippenringes zu führen.

Die Herstellung und Montage der Dichtung ist durch die adhäsive Festlegung von Lippenring und Stützring aneinander besonders einfach. Der aus Gummi bestehende Stützring wird während seiner Herstellung bevorzugt unmittelbar an den Außenumfang des Lippenrings angeformt und anvulkanisiert. Dem Vorhandensein von Maßdifferenzen im Bereich der gegenseitigen Berührungsfläche wird hierdurch von vornherein vorgebeugt.

Der Lippenring kann mit wenigstens einer durch zwei konvergierende Kegelflächen begrenzten Dichtkante versehen sein. Die Abstreifwirkung wird hierdurch merklich verbessert, wobei es sich als vorteilhaft erwiesen hat, wenn die der Dichtkante in Richtung des abgedichteten Raumes vorgelagerte Kegelfläche einen größeren Kegelwinkel umschließt als die axial gegenüberliegende Kegelfläche. Sind zwei Dichtkanten in axialer Richtung hintereinanderliegend angeordnet, dann ergibt sich neben einer verbesserten Abdichtwirkung eine verbesserte Gebrauchsdauer. Die Dichtkanten können im wesentlichen von übereinstimmendem Profil sein.

Es hat sich als vorteilhaft erwiesen, wenn die dem abgedichteten Raum zugewandte Kegelfläche des Stützbundes einen größeren Kegelwinkel aufweist als die von ihm abgewandte Kegelfläche. Hierbei kann sich eine gewisse Annäherung an die entsprechende Gestalt der Kegelfläche des Lippenrings ergeben, und damit bei sparsamsten Materialverbrauch hinsichtlich des relativ wertvollen PTFE ein Lippenring von großer Formbeständigkeit.

Die Stirnflächen der gebrauchsfertigen Dichtung können sich parallel zueinander erstrecken, was deren Herstellung und die Gestaltung des benötigten Einbauraumes vereinfacht. Sie sind der Dichtungsachse zweckmäßig im wesentlichen senkrecht zugeordnet.

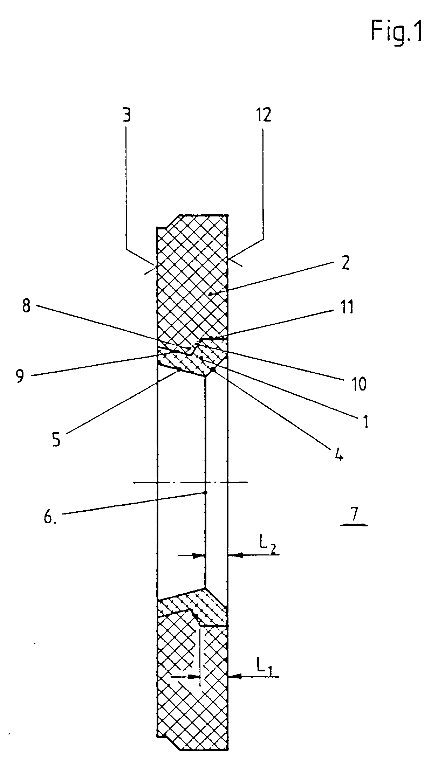

Eine beispielhafte Ausführung des erfindungsgemäßen Dichtung ist in der in der Anlage beigefügten Zeichnung in Figur 1 dargestellt. Sie wird nachfolgend näher erläutert:

Die gezeigte Dichtung ist zur Verwendung im Bereich des Spaltes zwischen der Gehäusewandung und der Kolbenstange eines Teleskopstoßdämpfers bestimmt. Dieser enthält ein gewisses Flüssigkeitsvolumen, das durch eine Gasdruckfeder derart vorgespannt ist, daß sich im schwingungsfreien, statischen Zustand ein Mindestinnendruck von 25 bar ergibt. Dieser kann durch die betriebsbedingte Einleitung von Schwingungen eine Steigerung erfahren und Werte zwischen 50 und 100 bar ohne weiteres erreichen.

Die Dichtung besteht aus dem innenliegenden Lippenring 1 aus PTFE und dem außenseitig an denselben anschließenden Stützring 2 aus Gummi. Der Lippen- und der Stützring sind einstückig auf adhäsive Weise verbunden und in axialer Richtung beiderseits durch die ineinander übergehenden, sich senkrecht zur Dichtungsachse erstreckenden Stirnflächen 3, 12 begrenzt.

Der Lippenring 1 wird innenseitig durch die beiden Kegelflächen 4, 5 begrenzt, die einander in der Dichtkante 6 durchschneiden. Die dem abgedichteten Raum 7 zugewandte Kegelfläche 4 weist einen Kegelwinkel auf, der etwa doppelt so groß ist wie derjenige der Kegelfläche 5. Hierdurch wird neben einer guten Abdichtung des abzudichtenden Raumes eine gute Rückförderung von Leckflüssigkeit in denselben während der oszillierenden Kolbenstangenbewegung erreicht.

Der Stützring dient der statischen Abdichtung und ist im Bereich der axialen Erstreckung der Kegelfläche 4 innenseitig durch die Zylinderfläche 11 begrenzt. Die relative Zuordnung der Kegelfläche 4 zur Oberfläche der abzudichtenden Kolbenstange erfährt dadurch auch beim Auftreten höchster Drücke keinerlei störende Veränderung.

Auf der von dem abzudichtenden Raum abgewandten Seite schließt sich an die Zylinderfläche 11 des Stützringes 2 der Stützbund 8 an, welcher in radialer Richtung nach innen vorspringt und in eine entsprechend geformte Ausnehmung des Lippenringes 1 eingreift. Der Lippenring 1 erfährt hierdurch eine axiale Abstützung, was relative Verlagerungen in bezug auf den Außenring 2 unter der Wirkung des in dem abzudichtenden Raum 7 herrschenden Druckes ausschließt. Zusätzliche Sicherheit wird diesbezüglich erhalten durch eine adhäsive gegenseitige Verbindung zwischen dem Innenring 1 und dem Stützring 2. Diese ist erzeugt durch unmittelbares Anformen und Anvulkanisieren des aus Gummi bestehenden Stützringes 2 an den Außenumfang des Innenringes 1.

Der Stützbund 8 wird innenseitig durch zwei einander durchschneidende Kegelflächen begrenzt. Diese haben beiderseits Kegelwinkel, die mit demjenigen der Kegelflächen 5 bzw. 4 des Lippenringes im wesentlichen übereinstimmen. Trotz eines vergleichsweise minimalen Querschnittes hat der Innenring 1 dadurch eine große Formbeständigkeit. Das gute Abdichtungsergebnis, das sich unter Verwendung der neuwertigen Ausführung erzielen läßt, bleibt dadurch langfristig erhalten.

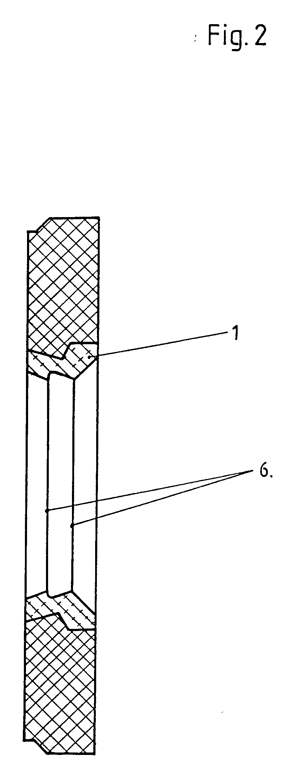

Die in Figur 2 gezeigte Ausführung unterscheidet sich von der vorstehend beschriebenen lediglich dadurch, daß der Lippenring 1 mit zwei axial hintereinander angeordneten Dichtkanten 6 versehen ist. Diese werden jeweils in einer einander entsprechenden Weise durch einander durchschneidende Kegelflächen gebildet. Die Gebrauchsdauer des Dichtringes erfährt hierdurch eine wesentliche Verbesserung.

## Patentansprüche

1. Dichtung für die Kolbenstange eines Teleskopstoßdämpfers, umfassend einen radial innenliegenden und wenigstens eine Dichtkante (6) aufweisenden Lippenring aus PTFE und einen den Lippenring außenumfangsseitig umschließenden Stützring aus Gummi, wobei der Lippen- und der Stützring adhäsiv verbunden und in axialer Richtung beiderseits durch ineinander übergehende Stirnflächen begrenzt sind, dadurch gekennzeichnet, daß der Stützring (2) den Lippenring (1) im Bereich der gegenseitigen Berührungsfläche auf der von dem abzudichtenden Raum (7) abgewandten Seite mit wenigstens einem nach innen vorspringenden Stützbund (8) hintergreift, daß dem Stützbund (8) eine sich im wesentlichen zylindrisch erstreckte Zylinderfläche (11) in Richtung des abgedichteten Raums (7) vorgelagert ist und daß die Zylinderfläche (11) eine axiale Länge (L1) hat, die wenigstens so groß ist wie der in gleicher Richtung gemessene Abstand (L2) der Dichtkante (6) von der Stirnfläche (12).

2. Dichtung nach Anspruch 1, dadurch gekennzeichnet, daß der Lippenring (1) mit wenigstens einer durch zwei konvergierende Kegelflächen (4, 5) begrenzten Dichtkante (6) versehen ist.

3. Dichtung nach Anspruch 2, dadurch gekennzeichnet, daß die der Dichtkante (6) in Richtung des abgedichteten Raums (7) vorgelagerte Kegelfläche (4) einen größeren Kegelwinkel umschließt als die gegenüberliegende Kegelfläche (5).

4. Dichtung nach Anspruch 1 bis 3, dadurch gekennzeichnet, daß der Stützbund (8) durch zwei einander durchschneidende Kegelflächen (9, 10) begrenzt ist.

5. Dichtung nach Anspruch 4, dadurch gekennzeichnet, daß die dem abgedichteten Raum (7) zugewandte Kegelfläche (10) einen größeren Kegelwinkel aufweist als die von ihm abgewandte Kegelfläche (9).

6. Dichtung nach Anspruch 1 bis 5, dadurch gekennzeichnet, daß sich die Stirnflächen (3, 12) im wesentlichen parallel zueinander erstrecken.

7. Dichtung nach Anspruch 6, dadurch gekennzeichnet, daß die Stirnflächen (3, 12) der Dichtungsachse im wesentlichen senkrecht zugeordnet sind.

## Claims

1. A seal for the piston rod of a telescopic shock absorber, comprising a radially inner lip ring which is made of PTFE and has at least one sealing edge (6) and a supporting ring of rubber enclosing the lip ring on its outer circumference, the lip ring and the supporting ring being adhesively bonded and delimited in the axial direction on both sides by end faces merging into one another, characterised in that the supporting ring (2) undercuts the lip ring (1) in the region of the opposite contact surface, on the side facing away from the chamber (7) to be sealed off, with at least one inwardly projecting supporting collar (8), in that an essentially cylindrically extended cylindrical surface (11) is disposed before the supporting collar (8) in the direction of the sealed-off chamber (7) and in that the cylindrical surface (11) has an axial length (L1) which is at least as large as the distance (L2), measured in the same direction, of the sealing edge (6) from the end face (12).

2. A seal according to claim 1, characterised in that the lip ring (1) is provided with at least one sealing edge (6) delimited by two converging conical surfaces (4, 5).

3. A seal according to claim 2, characterised in that the conical surface (4) disposed before the sealing edge (6) in the direction of the sealed-off chamber (7) encloses a larger conical angle than the opposite conical surface (5).

4. A seal according to any of claims 1 to 3, characterised in that the supporting collar (8) is delimited by two mutually intersecting conical surfaces (9, 10).

5. A seal according to claim 4, characterised in that the conical surface (10) facing the sealed-off chamber (7) has a greater conical angle than the conical surface (9) facing away from it.

6. A seal according to any of claims 1 to 5, characterised in that the end faces (3, 12) extend essentially parallel to one another.

7. A seal according to claim 6, characterised in that the end faces (3, 12) are associated essentially perpendicularly with the sealing axis.

## Revendications

1. Joint d'étanchéité pour la tige de piston d'un amortisseur télescopique, comportant une bague à lèvre formée de polytetrafluoréthylène, située radialement à l'intérieur et comportant au moins une arête d'étanchéité (6), ainsi qu'une bague d'appui formée de caoutchouc et entourant la bague à lèvre du côté de la périphérie extérieure, la bague à lèvre et la bague d'appui étant liées par adhésif et étant délimitées dans une direction axiale et des deux côtés par des surfaces frontales se rejoignant mutuellement, caractérisé en ce que la bague d'appui (2) s'accroche en arrière de la bague à lèvre (1), dans une zone de la surface correspondante de contact et sur le côté opposé au volume à étancher (7), au moyen d'au moins un collet d'appui (8) faisant saillie vers l'intérieur, en ce qu'il est prévu avant le collet d'appui (8), dans la direction du volume à étancher (7), une surface cylindrique (11) s'étendant dans l'essentiel cylindriquement et en ce que la surface cylindrique (11) a une longueur axiale (L1), qui est au moins aussi grande que l'espacement (L2), mesuré dans la même direction, entre l'arête d'étanchéité (6) et la surface frontale (12).

2. Joint selon la revendication 1, caractérisé en ce que la bague à lèvre (1) est pourvue d'au moins une arête d'étanchéité (6) délimitée par deux surfaces coniques convergentes (4, 5).

3. Joint selon la revendication 2, caractérisé en ce que la surface conique (4), située avant l'arête d'étanchéité (6) dans la direction du volume à étancher (7), délimite un plus grand angle de cône que la surface conique opposée (5).

4. Joint selon une des revendications 1 à 3, caractérisé en ce que le collet d'appui (8) est délimité par deux surfaces coniques (9, 10) qui se coupent mutuellement.

5. Joint selon la revendication 4, caractérisé en ce que la surface conique (10) dirigée vers le volume à étancher (7) a un plus grand angle de cône que la surface conique (9) qui lui est opposée.

6. Joint selon une des revendications 1 à 5, caractérisé en ce que les surfaces frontales (3, 12) s'étendent dans l'essentiel mutuellement parallèlement.

7. Joint selon la revendication 6, caractérisé en ce que les surfaces frontales (3, 12) sont orientées dans l'essentiel perpendiculairement à l'axe du joint.
